# EUROPEAN PATENT APPLICATION

(11) **EP 1 925 893 A2**
(43) Date of publication of application: **28.05.2008**
(21) Application number: 07022707.9
(22) Date of filing: 22.11.2007
(51) Int. Cl.: F25B 27/02, F25B 13/00

(54) **Air conditioner**

(30) Priority: 24.11.2006 JP 2006317062
(71) Applicant: Sanyo Electric Co., Ltd., Moriguchi-shi, Osaka-fu (JP)
(72) Inventor: Sakamoto, Naoki, Ora-gun Gunma 370-0603 (JP); Nakano, Sadayasu, Ota-shi Gunma 373-0817 (JP); Hirata, Ryoto, Ora-gun Gunma 370-0532 (JP)
(74) Representative: Glawe, Delfs, Moll

(57) **Abstract**

In an air conditioner (10), a cooling water circuit (41) for cooling a gas engine (30) is equipped with an exhaust heat withdrawing heat exchanger (48) for heat-exchanging cooling water and refrigerant, a hot water heat exchanger (52) which is disposed in parallel to the exhaust heat withdrawing heat exchanger (48) and heat-exchanges the cooling water and use water to increase the temperature of the use water, and a judging unit (62) for judging on the basis of an operation state of heating operation whether exhaust heat withdrawal of the refrigerant in the exhaust heat withdrawing heat exchanger is sufficient or not. If it is judged that the exhaust heat withdrawal is sufficient, at least a part of the cooling water is made to flow to the hot water heat exchanger (52).

## Description

### BACKGROUND OF THE INVENTION

### 1. Field of the Invention

The present invention relates to a technique of enabling effective use of exhaust heat of a gas engine in an engine driving type air conditioner.

### 2. Description of the Related Art

There is generally known an air conditioner equipped with a refrigerant circuit which has a compressor driven by a gas engine, a condenser, a pressure-reducing device and an evaporator and in which refrigerant discharged from the compressor is circulated, a cooling water circuit which withdraws exhaust heat of the gas engine and in which cooling water for cooling the gas engine is circulated, and an exhaust heat withdrawing heat exchanger for heat-exchanging the cooling water of the cooling water circuit and the refrigerant of the refrigerant circuit to withdrawing exhaust heat through the cooling water by the refrigerant (for example, see JP-A-2004-36966).

According to this type of air conditioner, under heating operation, cooling water is made to flow through the exhaust heat withdrawing heat exchanger to heat-exchange the cooling water and the refrigerant, whereby the refrigerant pressure is increased and thus the heating capacity is increased.

It has been expected to this type of air conditioner that the temperature of water to be used is increased by withdrawing exhaust heat of the gas engine and it is used for hot water supply.

However, when the exhaust heat of the gas engine is used for hot water supply under heating operation, the exhaust heat used to increase the heating capacity is relatively reduced, and thus the pressure of refrigerant flowing in a refrigerant pipe decreases, so that the air blow-out temperature in a room decreases and comfort of heating is lost under heating operation.

### SUMMARY OF THE INVENTION

The present invention has been implemented in view of the foregoing problem, and has an object to provide an air conditioner that enables use of hot water supply without losing the comfort of heating under heating operation.

In order to attain the above object, according to the present invention, there is provided an air conditioner having a refrigerant circuit which comprises a compressor driven by a gas engine, a condenser, a pressure-reducing device and an evaporator and in which refrigerant discharged from the compressor is circulated, a cooling water circuit which withdraws exhaust heat of the gas engine and in which cooling water for cooling the gas engine is circulated, and an exhaust heat withdrawing heat exchanger for heat-exchanging the cooling water of the cooling water circuit and the refrigerant of the refrigerant circuit, whereby the exhaust heat is withdrawn by the refrigerant through the cooling water, wherein the cooling water circuit is equipped with a hot water heat exchanger which is provided in parallel to the exhaust heat withdrawing heat exchanger and heat-exchanges the cooling water with use water to increase the temperature of the use water, and a judging unit for judging on the basis of an operation state of heating operation whether exhaust heat withdrawal of the refrigerant in the exhaust heat withdrawing heat exchanger is sufficient or not, and when it is judged that the exhaust heat withdrawal is sufficient, at least a part of the cooling water is made to flow to the hot water heat exchanger.

In the above air conditioner, it is preferable that the air conditioner comprises an outdoor unit and an indoor unit, and the judging unit may set a heating surplus capacity index corresponding to an indoor/outdoor capacity ratio representing the operation capacity of the indoor unit being actuated to a rated capacity of the outdoor unit and the outside air temperature, and judges that the exhaust heat withdrawal of the refrigerant in the exhaust heat withdrawing heat exchanger is sufficient when the heating surplus capacity index is equal to a predetermined threshold value or more.

Furthermore, in the above air conditioner, it is preferable that the judging unit judges that the exhaust heat withdrawal of the refrigerant in the exhaust heat withdrawing heat exchanger is sufficient when heat can be withdrawn from the outside air in the evaporator.

Still furthermore, in the above air conditioner, it is preferable that the judging unit judges that the exhaust heat withdrawal of the refrigerant in the exhaust heat withdrawing heat exchanger is sufficient when the temperature of the cooling water after the exhaust heat withdrawing heat exchanger is equal to a predetermined temperature or more.

Still furthermore, it is preferable that the air conditioner further comprises an electrical generator driven by the gas engine, and a correcting unit for correcting the heating surplus capacity index in accordance with a power generation amount of the electrical generator.

According to the present invention, when it is judged that exhaust heat withdrawal of the refrigerant in the exhaust heat withdrawing heat exchanger is sufficient during even heating operation, a part of the cooling water is made to flow into the hot water heat exchanger. Accordingly, the use water is heated in the hot water heat exchanger to create hot water, so that hot water supply can be established without obstructing heating capacity.

### BRIEF DESCRIPTION OF THE DRAWINGS

Fig. 1 is a refrigerant circuit diagram of an air conditioner according to an embodiment of the present invention;
Fig. 2 is a diagram showing a table data in which the outside temperature and the heating surplus capacity index corresponding to an indoor/outdoor operation capacity ratio are set;
Fig. 3 is a flowchart showing an judgment operation; and
Fig. 4 is a refrigerant circuit of an air conditioner having an electric generator.

### DETAILED DESCRIPTION OF THE PREFERRED EMBODIMENTS

Preferred embodiments according to the present invention will be described hereunder with reference to the accompanying drawings.

### (First Embodiment)

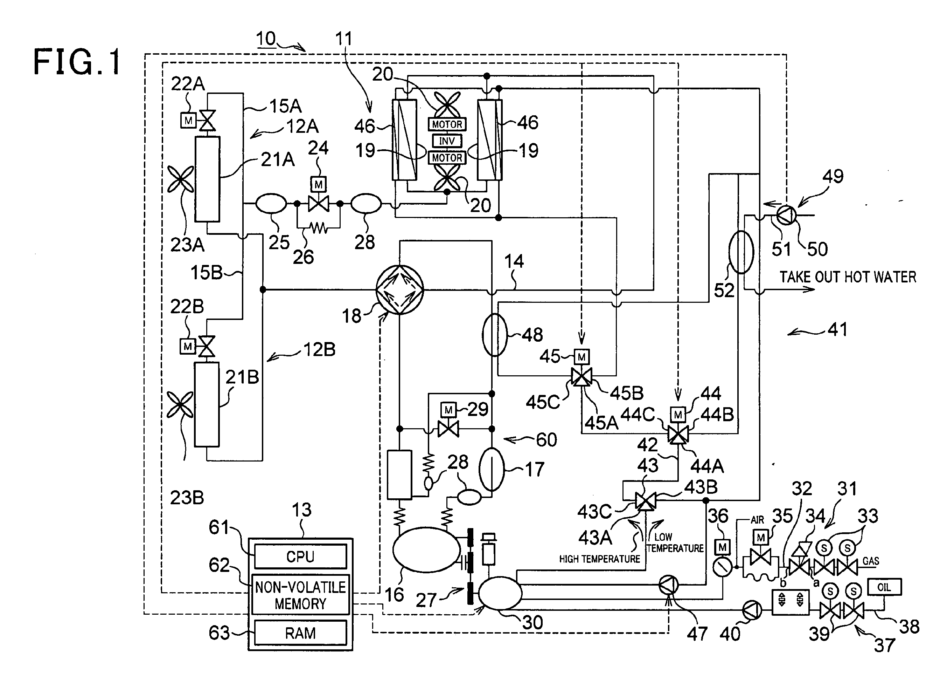

Fig. 1 is a refrigerant circuit diagram of an air conditioner according to an embodiment of the present invention.

As shown in Fig. 1, an air conditioner 10 has an outdoor unit 11, plural (for example, two) indoor units 12A, 12B and a controller 13. An outdoor refrigerant pipe 14 of an outdoor unit 11 is connected to respective indoor refrigerant pipes 15A and 15B of the indoor units 12A and 12B.

The outdoor unit 11 is disposed outdoors. A compressor 16 is connected to the outdoor refrigerant pipe 14, an accumulator 17 is connected to the suction side of the compressor 16, and a four-way valve 18 is connected to the discharge side of the compressor 16. Outdoor heat exchangers 19, an outdoor expansion valve (pressure-reducing device) 24 and a dry core 25 are successively connected to the four-way valve 18 side. An outdoor fan 20 for blowing air to the outdoor heat exchanger 19 is disposed to be adjacent to the outdoor heat exchanger 19. Furthermore, the compressor 16 is connected to a gas engine 30 through an electromagnetic clutch 27 and driven by the gas engine 30. Furthermore, a refrigerant bypass pipe 26 is provided so as to bypass the outdoor expansion valve 24.

The indoor units 12A and 12B are disposed indoors, and indoor heat exchangers 21A and 21B and indoor expansion valves (pressure-reducing devices) 22A and 22B are connected to the indoor refrigerant pipes 15A, 15B, respectively. Indoor fans 23A and 23B for blowing air to the indoor heat exchangers 21A and 21B are disposed so as to be adjacent to the indoor heat exchangers 21A and 21B. Reference Numeral 28 of Fig. 1 represents a strainer, and reference numeral 29 represents a relief valve for escaping the refrigerant pressure at the discharge side of the compressor 16 to the suction side of the compressor 16. In this embodiment, the outdoor refrigerant pipe 14 and the indoor refrigerant pipes 15A, 15B are connected to one another through the various kinds of equipment in a closed loop style, thereby forming a refrigerant circuit 60.

Furthermore, the controller 13 controls the operation of the outdoor unit 11 and the indoor units 12A and 12B, and specifically it controls the gas engine 30 (that is, the compressor 16), the four-way valve 18, the outdoor fan 20 and the outdoor expansion valve 24, and the indoor expansion valves 22A and 22B and the indoor fans 23A and 23B of the indoor units 12A and 12B. Furthermore, the controller 13 controls a circulating pump 47, a hot water take-out three-way valve 44, a cooling water three-way valve 45, an external pump 50, etc. of an engine cooling device 41.

The four-way valve 18 is switched by the controller 13 to set the air conditioner 10 to cooling operation or heating operation. That is, when the controller 13 switches the four-way valve 18 to the cooling operation side, the refrigerant flows as indicated by a solid arrow, and the outdoor heat exchanger 19 serves as a condenser while the indoor heat exchangers 21A and 21B serve as evaporators, thereby establishing a cooling operation state. Accordingly, the respective indoor heat exchangers 21A and 21B cool the rooms. Furthermore, when the controller 13 switches the four-way valve 18 to the heating operation side, the refrigerant flows as indicated by a broken-line arrow, and the indoor heat exchangers 21A and 21B serve as condensers while the outdoor heat exchanger 19 serves as an evaporator, thereby establishing a heating operation state. Accordingly, the respective ind0or heat exchangers 21A and 21B heat the rooms.

Furthermore, the controller 13 controls the valve opening degree of each of the indoor expansion valves 22A and 22B in accordance with an air conditioning load under cooling operation. Under heating operation, the controller 13 controls the valve opening degree of each of the outdoor expansion valve 24 and the indoor expansion valves 22A and 22B in accordance with the air conditioning load.

On the other hand, air-fuel mixture is supplied from an engine fuel supply device 31 into a combustion chamber (not shown) of the gas engine 30 for driving the compressor 16. In this engine fuel supply device 31, two fuel shut-off valves 33, a zero governor 34, a fuel adjusting valve 35 and an actuator 36 are successively disposed in a fuel supply pipe 32, and the side end portion of the actuator 36 of the fuel supply pipe 32 is connected to the combustion chamber of the gas engine 30.

Two fuel shut-off valves 33 are disposed in series to constitute a two-close type fuel shut-off valve mechanism, the two fuel shut-off valves 33 are cooperated with each other to be fully closed or opened, whereby the gas shut-off or communication can be selected without any leakage of fuel gas.

The zero governor 34 adjusts secondary pressure b to a predetermined fixed pressure irrespective of variation of primary pressure a out of the primary side fuel gas pressure (primary pressure a) and the secondary side fuel gas pressure (secondary pressure b), and stabilizes the operation of the gas engine 30.

The fuel adjusting valve 35 adjusts to a proper value the air-fuel ratio of the air-fuel mixture generated by introducing air from the upstream side of the actuator 36. Furthermore, the actuator 36 adjusts the supply amount of the air-fuel mixture supplied to the combustion chamber of the gas engine 30 to control the rotational number of the gas engine 30.

The gas engine 30 is connected to an engine oil supply device 37. The engine oil supply device 37 is designed so that an oil shut-off valve 39, an oil supply pump 40, etc. are disposed in an oil supply pipe 38, and properly supplies engine oil to the gas engine 30.

Specifically, the control of the gas engine 30 by the controller 13 is performed by controlling the fuel shut-off valve 33, the zero governor 34, the fuel adjusting valve 35 and the actuator 36 of the engine fuel supply device 31 and the oil shut-off valve 39 and the oil supply pump 40 of the engine oil supply device 37 through the controller 13.

The gas engine 30 is cooled by the engine cooling water circulating in the engine cooling device (cooling water circuit) 41. The engine cooling device 41 is equipped with a cooling water pipe 42 which is connected to an exhaust gas heat exchanger (not shown) attached to the gas engine 30 in a close loop form. In the cooling water pipe 42 are successively connected a wax three-way valve 43, a hot water take-out three-way valve 44, a cooling water three-way valve 45, a radiator 46 and a circulating pump 47. An exhaust heat withdrawing heat exchanger 48 and a hot water heat exchanger 52 are connected to the hot water take-out three-wave 44 and the cooling water three-way valve 45 in parallel to the radiator 46, respectively. The hot water heat exchanger 52 is configured to have an external hot supply system 49.

The wax three-way valve 43 quickly warms up the gas engine 30. In the wax three-way valve 43, an inlet 43A thereof is connected to an exhaust gas heat-exchanger side appended to the gas engine 30 in the cooling water pipe 42, a low-temperature side outlet 43B thereof is connected to the suction side of the circulating pump 47 in the cooling water pipe 42, and a high-temperature side outlet 43C thereof is connected to an inlet 44A of the hot water take-out three-way valve 44 through the cooling water pipe 42. The circulating pump 47 increases the pressure of the engine cooling water when actuated, and circulates the engine cooling water in the engine cooling device 41.

The engine cooling water flows from the discharge side of the circulating pump 47 into the exhaust gas heat exchanger of the gas engine 30 at about 40°C to withdraw exhaust heat (heat of exhaust gas) of the gas engine 30, and then it flows into the gas engine 30 to cool the gas engine 30 and is heated to about 80°C. The engine cooling water flowing from the gas engine 30 into the wax three-way valve 43 is returned from the low-temperature side outlet 43B to the circulating pump 47 and quickly warms up the gas engine 30 when the temperature of the engine cooling water is low (for example, 70°C or less). On the other hand, the engine cooling water flows from the high-temperature side outlet 43C to the hot water take-out three-way valve 44 when the temperature of the engine cooling water is high (for example, 70°C or more).

One outlet 44B of the hot water take-out three-way valve 44 is connected to the hot water heat exchanger 52 side in the cooling water pipe 42, and the other outlet 44C is connected to the inlet 45A of the cooling water three-way valve 45 through the cooling water pipe 42. The hot water take-out three-way valve 44 is a flow-amount adjusting type three-way valve for supplying the engine cooling water flowing from the wax three-way valve 43 through the inlet 44 therein to the hot water heat exchanger 52 through one outlet 44B or to the inlet 45A side of the cooling water three-way valve 45 through the other outlet 44C, or supplying the engine cooling water concerned to both the hot water heat exchanger 52 and the inlet 45A side while the distribution ratio is changed. The hot water take-out three-way valve 44 is driven by a motor (not shown), and the motor is controlled by the controller 13.

The hot water heat exchanger 52 is a plate type heat exchanger for heat-exchanging hot water as use water flowing in an external pipe 51 of a hot water supply system 49 having an external pump 50 with engine cooling water flowing from the wax three-way valve 43 and heating the hot water of the hot water supply system 49 with exhaust heat of the gas engine 30 to increase the temperature of the hot water. The hot water of the hot water supply system 49 flows into the hot water heat exchanger 52 at about 60°C, for example, whereby the hot water is supplied to the outside while the temperature thereof is increased to about 70°C. The hot water of the hot water supply system 49 which is increased in temperature as described above is used for hot water supply or the like. The engine cooling water which is heat-exchanged with the hot water of the hot water supply system 49 by the hot water heat exchanger 52 is reduced in temperature (cooled) to about 50°C, passed through the suction side of the circulating pump 47, returned to the exhaust gas heat exchanger of the gas engine 30, and then cools the gas engine 30.

On the other hand, one outlet 45B of the cooling water three-way valve 45 is connected to the radiator 46 side in the cooling water pipe 42, and the other outlet 45C is connected to the exhaust heat withdrawing heat exchanger 48 side in the cooling water pipe 42. The cooling water three-way valve 45 is a flow amount adjusting type three-way valve for leading the engine cooling water flowing from the hot water take-out three-way valve 44 through the inlet 45A therein to the radiator 46 through one outlet 45B or the exhaust heat withdrawing heat exchanger 48 through the other outlet 45C, or to both the radiator 46 and the exhaust heat withdrawing heat exchanger 48 while the distribution ratio is changed. The cooling water three-way valve 45 is driven by a motor (not shown), and the motor is controlled by the controller 13.

The radiator 46 radiates heat of the engine cooling water and cools the engine cooling water to about 40°C. The engine cooling water cooled by the radiator 46 passes through the suction side of the circulating pump 47 and returns to the exhaust gas heat exchanger of the gas engine 30 to cool the gas engine 30. Furthermore, the radiator 46 is disposed so as to be adjacent to the outdoor heat exchanger 19 of the air conditioner 10.

Furthermore, the exhaust heat withdrawing heat exchanger 48 is a plate type heat exchanger for heat-exchanging the gas refrigerant flowing through the outdoor refrigerant pipe 14 at the inlet side of the compressor 16 with the engine cooling water and heating this refrigerant by the exhaust heat of the gas engine 30, thereby increasing the temperature of the refrigerant. The exhaust heat withdrawing heat exchanger 48 is disposed between the four-way valve 18 of the refrigerant circuit 60 and the accumulator 17, and it makes the refrigerant evaporated in the evaporator (that is, the outdoor heat exchanger 19) during heating operation withdraw the exhaust heat of the gas engine 30, thereby increasing the heating capacity. Particularly, when the outside air temperature is low (for example, below 0°C or less), there is a case where the heat exchanger between the outside air and the refrigerant cannot be sufficiently performed in the evaporator. Therefore, by making the exhaust heat withdrawing heat exchanger 48 function as a sub evaporator, the heating capacity can be kept and increased. Accordingly, the exhaust heat withdrawing heat exchanger 48 is mainly used under only heating operation.

The engine cooling water heat-exchanged with the refrigerant flowing in the refrigerant circuit 60 by the exhaust heat withdrawing heat exchanger 48 is reduced in temperature (cooled) to about 50°C, passed through the suction side of the circulating pump 47 and then returned to the exhaust gas heat exchanger of the gas engine 30 to cool the gas engine 30.

As described above, in the air conditioner 10 according to this embodiment, the engine cooling device 41 in which the engine cooling water flows is equipped with the hot water heat exchanger 52, and the engine cooling water is supplied to the hot water heat exchanger 52, whereby the engine exhaust is withdrawn from the engine cooling water to enable use of hot water supply at all times during both the cooling operation and heating operation.

The air conditioner 10 is an apparatus for mainly performing cooling or heating operation on a room, and thus it is favorable that the engine exhaust heat during heating operation is mainly used to increase the heating capacity. On the other hand, for example in a case where a heating load is small and the outdoor unit 11 has extra heating capacity to spare, it is favorable that the engine exhaust heat can be positively used for hot water supply and the engine exhaust heat can be effectively used even during heating operation.

Therefore, this embodiment is equipped with an judging unit for judging, on the basis of the operation state of the air conditioner 10, whether the exhaust heat withdrawal of refrigerant in the exhaust heat withdrawing heat exchanger 48 is sufficient or not. In this case, CPU 62 described later of the controller 13 functions as the judging unit.

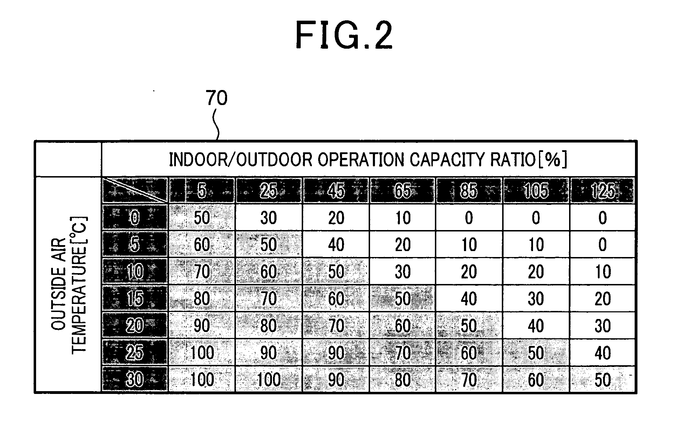

The controller 13 is equipped with a non-volatile memory 561 (storage unit) for storing a control program and control data in advance, a CPU 62 for controlling the whole of the air conditioner 10 on the basis of the control program, etc. in the non-volatile memory 61, and RAM 63 for temporarily storing various kinds of data. In the first embodiment, a table data 70 in which the outside temperature and the heating surplus capacity index corresponding to a indoor/outdoor operation capacity ratio are set in advance as shown in Fig. 2 is used to judge whether the exhaust heat withdrawal of refrigerant in the exhaust heat withdrawing heat exchanger 48 is sufficient or not. The table data 70 are stored in the non-volatile memory 61 of the controller 13.

Here, the indoor/outdoor operation capacity ratio represents the ratio of the total operation capacity (kw) of the respective actuating indoor units 12 (under thermo-on state) to the rated operation capacity (kw) of the outdoor unit 11. As the indoor/outdoor operation capacity ratio is smaller, the operation load of the indoor unit 12 is reduced. Furthermore, the heating surplus capacity index represents an extra heating capacity to spare by a numerical value under the operation state corresponding to the outside temperature and the indoor/outdoor operation capacity ratio. As the heating surplus capacity index is larger, it is indicated that the extra (surplus) heating capacity is larger. In the table data 70, when the outside temperature is high (30(°C)) and the indoor/outdoor operation capacity ratio is small (5%), the heating surplus capacity index is high (100) and it is indicated that the heating capacity of the outdoor unit 11 has a sufficiently extra heating capacity to spare. Conversely, when the outside temperature is low (0 (°C)) and the indoor/outdoor operation capacity ratio is large (125(%)), the heating surplus capacity index is small (9), and it is indicated that the heating capacity of the outdoor unit 11 has no extra heating capacity to spare.

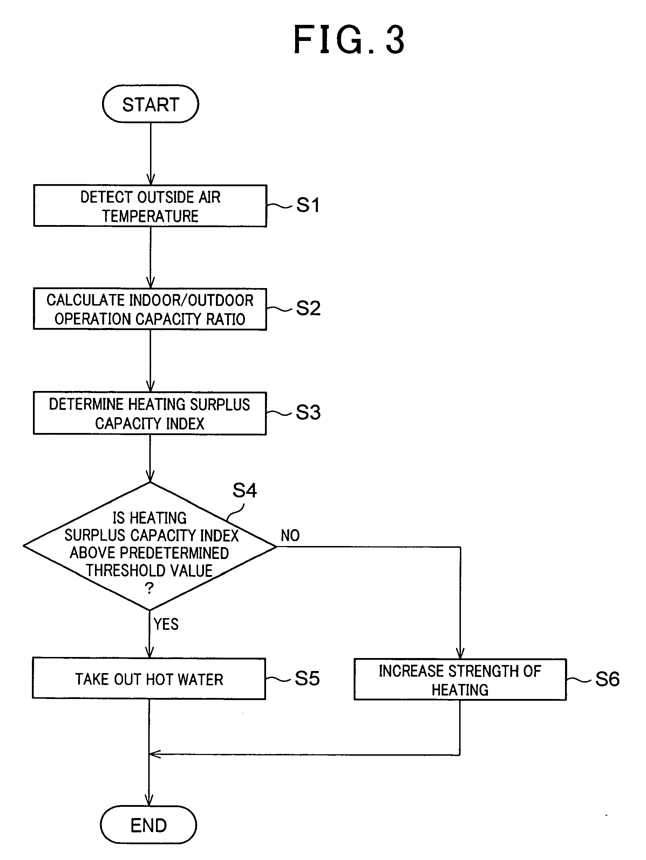

Next, the operation of judging whether the exhaust heat withdrawal is sufficient or not will be described with reference to Fig. 3.

First, Under heating operation, CPU 62 of the controller 13 obtains the outside temperature from a temperature sensor (not shown) disposed in the outdoor unit 11 (step S1). Subsequently, CPU 62 determines the total operation capacity (operation load) of the indoor units 12 executing heating operation, and calculates the indoor/outdoor operation capacity ratio from the total operation capacity (step S2).

Subsequently, CPU 62 collates the outside temperature and the indoor/outdoor operation capacity ratio with the table data 70 read out from the non-volatile memory 61, and determines the heating surplus capacity index corresponding to this operation state (step S3). In this case, assuming that the outside temperature is equal to 10 (°C) and the indoor/outdoor operation capacity ratio is equal to 45(%), the heating surplus capacity index corresponding to the operation state is determined as 50 from the table data 70.

Subsequently, it is judged whether the heating surplus capacity index determined in step S3 is equal to a predetermined threshold value P or more (step S4). This threshold value P may be set to any numerical value, and in this embodiment, it is set to 50. The threshold value P is stored in the non-volatile memory 61 with being rewritable.

In this judgment, when the heating surplus capacity index is equal to the predetermined threshold value P or more (step S4; Yes), it is estimated that the heating capacity of the outdoor unit 11 has an extra heating capacity to spare, and thus it is judged that the exhaust heat withdrawal of refrigerant in the exhaust heat withdrawing heat exchanger 48 is sufficient. Therefore, CPU 62 executes hot water take-out control (step S5) . Specifically, CPU 62 operates the external pump 50 of the hot water supply system 49, and also controls the hot water take-out three-way valve 44 so that one outlet 44B thereof is opened and the other outlet 44C thereof is closed. The controller 13 may perfectly close the other outlet 44C, or may reduce the opening degree of the other outlet 44C to the extent that a part of the engine cooling water flows into the exhaust heat withdrawing heat exchanger 48.

According to this construction, the engine cooling water flows into the hot water heat exchanger 52 through the hot water take-out three-way valve 44, and it is heat-exchanged with hot water of the hot water supply system 49 in the hot water heat exchanger 52, whereby the exhaust heat of the engine can be effectively used and hot water can be taken out.

In this case, since it is judged that the exhaust heat withdrawal of the refrigerant in the exhaust heat withdrawing heat exchanger 48 is sufficient, the outdoor unit 11 can sufficiently heat the indoor space in the capacity range thereof even when no engine cooling water (engine exhaust heat) is supplied to the exhaust heat withdrawing heat exchanger 48, and thus the heating capacity (performance) of the outdoor unit 1 is not disturbed.

On the other hand, if it is judged that the heating surplus capacity index is less than the predetermined threshold value P (step S4; No), it is estimated that the heating capacity of the outdoor unit 1 has little (or no) extra heating capacity to spare. Accordingly, CPU 62 identifies that the exhaust heat withdrawal of the refrigerant in the exhaust heat withdrawing heat exchanger 48 is not sufficient, and uses the engine exhaust heat to increase the heating capacity (step S6). Specifically, CPU 62 controls the hot water take-out three-way valve 44 and the cooling water three-way valve 45 so that substantially the total amount of the engine cooling water flows into the exhaust heat withdrawing heat exchanger 48. Accordingly, the refrigerant and the engine cooling water are heat-exchanged in the exhaust heat withdrawing heat exchanger 48, whereby the exhaust heat of the engine is withdrawn by the refrigerant, and thus the refrigerant is heated, so that the heating capacity (performance) can be increased and the heating operation is not obstructed.

According to the first embodiment, the heating surplus capacity index corresponding to the indoor/outdoor capacity ratio and the outside air temperature is determined on the basis of the preset table data 70, and it is judged on the basis of the heating surplus capacity index whether the exhaust heat of the refrigerant in the exhaust heat withdrawing heat exchanger is sufficiently withdrawn. Therefore, the number of the steps of calculation processing is reduced at maximum, so that the judgment can be easily performed. By controlling the hot water take-out three-way valve 44 on the basis of this judgment result, the engine exhaust heat can be effectively used to take out hot water without disturbing the heating capacity during heating operation.

In the first embodiment, the heating surplus capacity index corresponding to the outside air temperature and the indoor/outdoor operation capacity ratio is set as the table data in advance, however, the present invention is not limited to this embodiment. Specifically, the heating capacity index may be calculated from the outside temperature and the indoor/outdoor operation capacity ratio. According to this construction, it is unnecessary to store the table data 70 in the non-volatile memory 61, and thus the construction of the controller 13 can be simplified.

Furthermore, in the judgment of the step S4, it is judged whether the heating surplus capacity index is equal to the predetermined threshold value P or more. In addition, the indoor blow-out temperature Ta of the indoor unit 12 may bedetected tojudgewhethertheindoorblow-outtemperature Ta is equal to a predetermined temperature (for example, 42°C). This predetermined temperature is stored in the non-volatile memory 61 with being rewritable. According to this construction, the actual indoor blow-out temperature Ta as well as the heating surplus capacity index is used as a reference for the judgment, and thus the judgment and the control can be more accurately performed. When there are a plurality of indoor units 12, the average value of the indoor blow-out temperature values of the respective indoor units 12 may be adopted as the indoor blow-out temperature Ta.

Furthermore, any one of the outside air temperature and the indoor/outdoor operation capacity ratio may be used as a judgment value for the judgment. According to this construction, the above judgment can be easily executed, and the construction of the controller 13 can be simplified.

### (Second Embodiment)

A second embodiment is different from the first embodiment in that the judgment as to whether the exhaust heat withdrawal of the refrigerant in the exhaust heat withdrawing heat exchanger 48 is sufficient or not is executed on the basis of a judgment as to whether frost formation occurs on the outdoor heat exchanger 19. In the second embodiment, CPU 62 of the controller 13 also functions as the judging unit.

When heat can be withdrawn from the outside air in he outdoor heat exchanger 19 during heating operation, the refrigeration cycle can be formed by the withdrawn heat, and thus the heating capacity of the outdoor unit 11 is not disturbed even when the engine exhaust heat is not used to heat the refrigerant. Furthermore, the restriction amount of the outdoor expansion valve 24 is adjusted so as to obtain required overheat. Here, in order to obtain required overheat, it is necessary that the evaporation temperature in the outdoor heat exchanger 19 is sufficiently lower than the outside temperature. Therefore, when the outside air temperature is low, the restriction is also reduced, and the coil temperature (inlet side) of the outdoor heat exchanger 19 is reduced. If this coil temperature continues a state where it is below zero, the outdoor heat exchanger 19 is frosted/frozen, and finally the heat-exchange with the outside air is impossible.

Therefore, when no frost formation occurs on the outdoor heat exchanger 19, that is, heat can be withdrawn from the outside air, it can be judged that the exhaust heat withdrawal of the refrigerant in the exhaust heat withdrawing heat exchanger 48 is sufficient. The judgment as to whether frost occurs on the outdoor heat exchanger 19 can be performed by measuring the temperature Tb at the liquid side (at the heating inlet side) of the outdoor heat exchanger 19 and judging whether the condition that the temperature Tb is not more than 0° (the temperature Tb ≤ 0°C) is continued for a predetermined time (for example, 60 minutes). This predetermined time is stored in the non-volatile memory 61 with being rewritable.

Accordingly, when this condition is not satisfied, that is, when heat can be withdrawn from the outside air, CPU 62 of the controller 13 operates the external pump 50 of the hot water supply system 49, and controls the hot water take-out three-way valve 44 so that one outlet 44B of the hot water take-out three-way valve 44 is opened and the other outlet 44C thereof is closed as in the case of the first embodiment. According to this embodiment, the engine cooling water flows into the hot water heat exchanger 52 through the hot water take-out three-way valve 44, and is heat-exchanged with the hot water of the hot water supply system 49 in the hot water heat exchanger 52, whereby the engine exhaust heat can be effectively used and hot water can be taken out.

On the other hand, when the above condition is satisfied, the outdoor heat exchanger 19 is frosted, so that heat cannot be withdrawn from the outside air and the heating operation is obstructed. Therefore, CPU 62 controls the hot water take-out three-way valve 44 and the cooling water three-way valve 45 so that the engine cooling water flows into the exhaust heat withdrawing heat exchanger 48. In this case, it is favorable to control the cooling water three-way valve 45 so that a part of the engine cooling water flows into the radiators 46. According to this construction, the high-temperature engine cooling water flows into the radiators 4 6, whereby the outdoor heat exchangers 19 adjacent to the radiators 46 are defrosted. If the outdoor heat exchangers 19 are defrosted and the above condition is not satisfied, the engine exhaust heat can be used for hot water supply again.

According to the second embodiment, when the heat withdrawal from the outside air is possible in the outdoor heat exchanger 19 during heating operation, the controller 13 judges that the exhaust heat withdrawal of the refrigerant in the exhaust heat withdrawing heat exchanger 48 is sufficient, and thus most of the engine exhaust heat can be used to take out hot water without obstructing the heating capacity even during the cold season.

### (Third Embodiment)

This third embodiment is different from the first or second embodiment in that the judgment as to whether the exhaust heat withdrawal of the refrigerant in the exhaust heat withdrawing heat exchanger 48 is sufficient or not is performed on the basis of the engine cooling water temperature Tc at the outlet side of the exhaust heat withdrawing heat exchanger 48. In the third embodiment, CPU 62 of the controller 13 also functions as the judging unit.

The engine cooling device 41 is equipped with the wax three-way valve 43 as described above, the wax three-way valve 43 does not supply this engine cooling water to the exhaust heat withdrawing heat exchanger 48 side unless the temperature of the engine cooling water is high (above 70°C).

In the exhaust heat withdrawing heat exchanger 48, the engine cooling water and the refrigerant are heat-exchanged with each other to heat this refrigerant, thereby increasing the heating capacity. In this case, when the engine cooling water temperature Tc at the outlet side of the exhaust heat withdrawing heat exchanger 48 is equal to a predetermined temperature (for example, 60°C) or more, heat transfer from the engine cooling water to the refrigerant is little, and thus it can be judged that the exhaust heat withdrawal of the refrigerant in the exhaust heat withdrawing heat exchanger 48 is sufficient, so that this exhaust heat can be used for hot water supply.

In this case, it is favorable that some differential value (for example, about 4°C) is provided to this predetermined temperature. Specifically, a differential value of ±2°C may be provided to 60°C set as the predetermined temperature. When the engine cooling water temperature Tc is equal to 62°C or more, it is judged that the exhaust heat withdrawal of the refrigerant in the exhaust heat withdrawing heat exchanger 48 is sufficient. When the engine cooling water temperature Tc is equal to 58°C or less, it is judged that the exhaust heat withdrawal of the refrigerant in the exhaust heat withdrawing heat exchanger 48 is not sufficient. According to this construction, when the hot water take-out control is execute, hunching in the neighborhood of the predetermined temperature can be prevented, and stable operation can be performed. The predetermined temperature and the differential value are stored in the non-volatile memory 61 with being rewritable.

According to the third embodiment, when the engine cooling water temperature Tc at the outlet side of the exhaust heat withdrawing heat exchanger is equal to a predetermined temperature or more, the controller 13 judges that the exhaust heat withdrawal of the refrigerant in the exhaust heat withdrawing heat exchanger 48 is sufficient. Therefore, under the state that the heating capacity during heating operation is sufficiently secured, surplus exhaust heat can be used to take out hot water.

Furthermore, when the temperature of the engine cooling water is above the operating temperature (for example, 70°C) of the wax three-way valve 43, the hot water may be taken out. That is, by executing the take-out of the hot water immediately when the engine exhaust heat is allowed to be used, the hot water supply can be used as quickly as possible. In this case, the exhaust heat in the exhaust heat withdrawing heat exchanger 48 is relatively reduced and thus it is temporarily impossible to enhance the heating capacity. However, the engine cooling water is circulated in the engine cooling device 41, and thus it is heated at some stage, so that the heating capacity is not obstructed.

### (Fourth Embodiment)

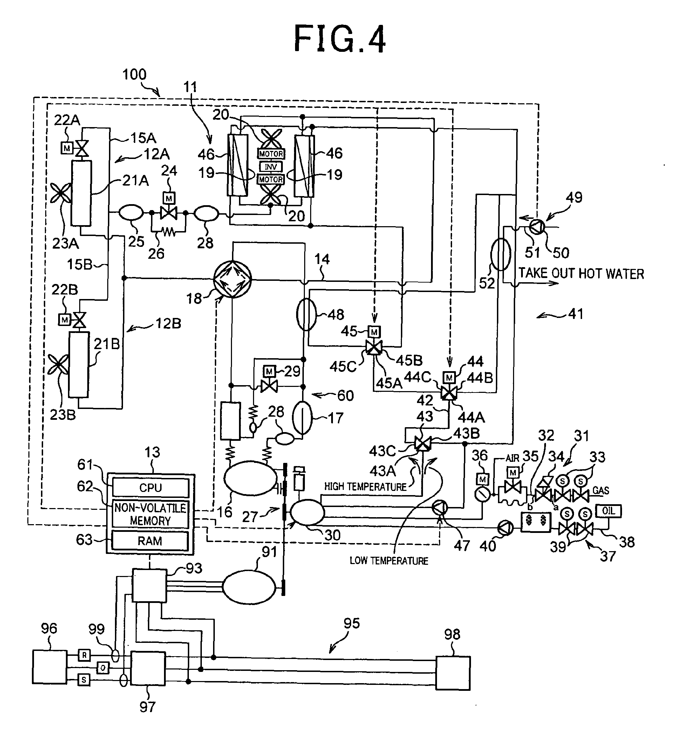

Fig. 4 is a refrigerant circuit diagram showing the construction of an air conditioner 100 according to a fourth embodiment.

This air conditioner 100 is different from the air conditioner 10 in that it has an electrical generator 91 driven by a gas engine 30.

The electrical generator 91 has the electrical generating capacity corresponding to the driving capacity of the gas engine when the compressor 16 is separated from the gas engine 30 through an electromagnetic clutch 27, and it can supply sufficient power as an electrical generating system during an intermediate season in which the air conditioning operation is not carried out.

A system interconnection inverter 93 is connected to the electrical generator 91, and the system interconnection inverter 93 converts three-phase AC power from the electrical generator 91 to DC power through an AC/DC converter, converts the DC power to three-phase AC power of 200V and then outputs it to a commercial system 95. The commercial system 95 contains a commercial power source 96, a breaker 97 and a customer load 98, and the system interconnection inverter 93 is connected between the breaker 97 and the customer load 98.

A power detector 99 disposed between the commercial power source 96 and the breaker 97 is connected to the system interconnection inverter 93. This power detector 99 obtains a power value supplied to the commercial system 95 on a real-time basis and the thus-obtained power value data is input to the system interconnection inverter 93 and transmitted to the controller 13 through a communication line.

As described above, in the air conditioner 100 having the electrical generator 91, the gas engine 30 drives the compressor 16 and the electrical generator 91. Therefore, even in the case of the same air conditioning load, the load of the gas engine 30 and the engine exhaust heat are increased by the amount corresponding to the driving amount of the electrical generator 91 as compared with the air conditioner 10. Accordingly, it is necessary to effectively use the engine exhaust heat in consideration of the above increase of the engine exhaust heat.

The fourth embodiment is equipped with a correcting unit for correcting the heating surplus capacity index set in the table data 70 in accordance with the power generation amount of the electrical generator 91 when it is judged by using the table data 70 whether the exhaust heat is sufficiently withdrawn. The correcting unit changes the value of the heating surplus capacity index, and CPU 62 of the controller 13 functions as the correcting unit.

Specifically, CPU 62 reads out the correction value corresponding to the power generation amount (power value) transmitted from the system interconnection inverter 93 from the non-volatile memory 61, and changes the heating surplus capacity index of the table data 70 on the basis of the correction value. For example, when the power generation amount of the electrical generator 91 is equal to 2 (kw), CPU 62 reads out the correction value corresponding to this power generation amount (10 in this construction) from the non-volatile memory 61, and adds it to each heating surplus capacity index.

According to this construction, the heating surplus capacity index is changed in accordance with the power generation amount, and thus in consideration of the engine exhaust heat increased by the power generation, it can be easily judged whether the exhaust heat of the refrigerant in the exhaust heat withdrawing heat exchanger 48 is sufficient or not, and the engine exhaust heat can be effectively used.

Furthermore, CPU 62 of the controller 13 can know the power generation amount by the system interconnection inverter 93. Therefore, the engine load which is increased by the power generation can be known by back calculation from the power generation amount, and also the engine exhaust heat corresponding to the load can be estimated. For example, when the power generation of 4 (kw) is executed, 10 (kw) is increased as fuel consumption if the power generation efficiency is equal to 40%. If 25% of this increment can be withdrawn as hot water, the heat quantity is calculated as 10 (kw) x 25% = 2.5(kw).

Furthermore, if the temperature at the outlet/inlet of the hot water supply system 49 (for example, the outlet/inlet of the hot water heat exchanger 52) and the hot water flow amount are obtained, the heat quantity being taken out can be calculated. Therefore, by controlling the hot water take-out three-way valve 44 so that the heat quantity taken out as hot water and the exhaust heat amount corresponding to the power generation amount are balanced with each other, only the heat of the power generation load can be taken out.

## Claims

1. An air conditioner having a refrigerant circuit which comprises a compressor driven by a gas engine, a condenser, a pressure-reducing device and an evaporator and in which refrigerant discharged from the compressor is circulated, a cooling water circuit which withdraws exhaust heat of the gas engine and in which cooling water for cooling the gas engine is circulated, and an exhaust heat withdrawing heat exchanger for heat-exchanging the cooling water of the cooling water circuit and the refrigerant of the refrigerant circuit, whereby the exhaust heat is withdrawn by the refrigerant through the cooling water, wherein the cooling water circuit is equipped with a hot water heat exchanger which is provided in parallel to the exhaust heat withdrawing heat exchanger and heat-exchanges the cooling water with use water to increase the temperature of the use water, and a judging unit for judging on the basis of an operation state of heating operation whether exhaust heat withdrawal of the refrigerant in the exhaust heat withdrawing heat exchanger is sufficient or not, and when it is judged that the exhaust heat withdrawal is sufficient, at least a part of the cooling water is made to flow to the hot water heat exchanger.

2. The air conditioner according to claim 1, wherein the air conditioner comprises an outdoor unit and an indoor unit, and the judging unit sets a heating surplus capacity index corresponding to an indoor/outdoor capacity ratio representing the operation capacity of the indoor unit being actuated to a rated capacity of the outdoor unit and the outside air temperature, and judges that the exhaust heat withdrawal of the refrigerant in the exhaust heat withdrawing heat exchanger is sufficient when the heating surplus capacity index is equal to a predetermined threshold value or more.

3. The air conditioner according to claim 1, wherein the judging unit judges that the exhaust heat withdrawal of the refrigerant in the exhaust heat withdrawing heat exchanger is sufficient when heat can be withdrawn from the outside air in the evaporator.

4. The air conditioner according to claim 1, wherein the judging unit judges that the exhaust heat withdrawal of the refrigerant in the exhaust heat withdrawing heat exchanger is sufficient when the temperature of the cooling water after the exhaust heat withdrawing heat exchanger is equal to a predetermined temperature or more.

5. The air conditioner according to claim 2, further comprising an electrical generator driven by the gas engine, and a correcting unit for correcting the heating surplus capacity index in accordance with a power generation amount of the electrical generator.
